# NEUE EUROPÄISCHE PATENTSCHRIFT

(11) **EP 2 062 478 B2**
(45) Veröffentlichungstag und Bekanntmachung des Hinweises auf die Entscheidung über den Einspruch: **03.07.2013**
(45) Hinweis auf die Patenterteilung: 28.10.2009
(21) Anmeldenummer: 07022489.4
(22) Anmeldetag: 20.11.2007
(51) Int. Cl.: A22C 11/02

(54) **Vakuumfüller zur Herstellung von gefüllten Würsten und Verfahren zum abfüllen von Lebensmitteln mit einem Vakuumfüller**
Vacuum filler for filling sausages and method of filling foodstuffs by means of a vacuum filler
Remplisseuse sous vide pour la fabrication de saucisses et procédé de remplissage de denrées alimentaires par une remplisseuse sous vide

(43) Veröffentlichungstag der Anmeldung: 27.05.2009
(73) Patentinhaber: Albert Handtmann Maschinenfabrik GmbH & Co. KG, 88400 Biberach (DE)
(72) Erfinder: Willburger, Peter, 88255 Baindt (DE); Mueller, Gerhard, 88433 Schemmerhofen (DE)
(74) Vertreter: Grünecker, Kinkeldey, Stockmair & Schwanhäusser

(56) Entgegenhaltungen:
- EP-A- 0 484 705
- EP-A- 0 915 325
- EP-B1- 1 289 374
- WO-A1-97/26533
- WO-A2-2007/033294
- DE-A1- 19 500 326
- DE-A1-102005 032 678
- DE-U1-202006 000 282
- US-A- 4 554 955
- US-A- 5 478 990
- US-B2- 6 724 309

## Beschreibung

Die Erfindung betrifft eine Abfüllmaschine sowie ein Verfahren zum Abfüllen von Lebensmitteln gemäß den Oberbegriffen des Anspruchs 1 und des Anspruchs 8.

In Lebensmittel verarbeitenden Betrieben werden häufig Füll- oder Dosiermaschinen eingesetzt, die mit Behältern beschickt werden. Diese Behälter werden in anderen Abteilungen oder Bereichen der Firmen mit dem zubereiteten Lebensmittel, z. B. Brät, befüllt und zu den Füllmaschinen transportiert (wie z.B. im Dokument DE 19500326). Auf den Transportwegen oder im Bereitstellungsbereich der Füllmaschinen kann es zu längeren Wartezeiten der Behälter kommen, wenn beispielsweise Behälter mit später produzierter Ware zuerst abgefüllt werden. Es kann auch zu Verwechslungen kommen, wenn z. B. mehrere Produktionslinien mit unterschiedlichen Produkten nebeneinander produzieren.

Bisher werden in Lebensmittel verarbeitenden Betrieben, insbesondere in fleischverarbeitenden Betrieben, Edelstahlbehälter, sogenannte Brätwagen, verwendet. In einem sogenannten Cutter wird das Brät zubereitet und zum Zweck des Weitertransports chargenweise in Brätwagen abgefüllt. Eine Cutterbefüllung entspricht beispielsweise einer Charge und kann mehrere Brätwagenfüllungen umfassen. Diese befüllten Brätwagen werden dann zu Abfüllmaschinen, z. B. Vakuumfüllmaschinen, transportiert. Aufgrund der Chargengröße stehen im Bereitstellungsbereich mehrere Brätwagen, oft auf engem Raum, so dass es vorkommen kann, dass früher produzierte Chargen später abgefüllt, bzw. verpackt werden.

Die Kennzeichnung der Chargen über Art und Herstellzeitpunkt des Inhalts erfolgt häufig mit handgeschriebenen Zetteln, die an den Brätwagen geheftet werden oder dem Brätwagen beigelegt werden. In manchen Fällen werden auch Brätwagen mit einer festen Kennung, beispielsweise Strichcode, verwendet.

Dennoch kommt es immer wieder zum Problem, dass es zu Verwechslungen kommt, insbesondere dann, wenn mehrere Produktionslinien mit unterschiedlichen Produkten nebeneinander produzieren. Die zuvor gezeigten Maßnahmen verhindern auch nicht wirksam, dass die Behälter in der falschen Reihenfolge abgefüllt werden.

Hiervon ausgehend liegt der vorliegenden Erfindung die Aufgabe zugrunde, eine Abfüllmaschine sowie ein entsprechendes Verfahren bereitzustellen, die einen störungsfreien und korrekten Ablauf beim Füllen ermöglichen.

Erfindungsgemäß wird diese Aufgabe durch die Merkmale der Ansprüche 1 und 8 gelöst.

Gemäß der vorliegenden Erfindung ist ein Datenlesegerät vorgesehen, das Behälterdaten, die in einer Speichereinrichtung an den jeweiligen Behältern gespeichert sind, liest bzw. empfängt, wobei die Maschinensteuerung derart ausgelegt ist, dass der Abfüllprozess in Abhängigkeit der gelesenen Behälterdaten durchgeführt wird. Dadurch, dass vor dem Abfüllen die Behälterdaten gelesen werden, können Fehler beim Abfüllen wirksam verhindert werden. Der Abfüllprozess und insbesondere das Beschicken erfolgt damit in korrekter Weise oder gegebenenfalls auch gar nicht. Auch eine Verwechslung von unterschiedlichen Produkten kann vermieden werden, indem falsche Produkte nicht zur weiteren Verarbeitung angenommen werden. Auch die Reihenfolge (first in, first out) kann eingehalten werden. Auch zu lange bereitstehendes Brät wird dann von der Füllmaschine nicht mehr angenommen. Auch Produkte mit erhöhter Temperatur werden nicht angenommen. Eine automatische Anwahl des Abfüllprogramms in Abhängigkeit der Behälterdaten ist möglich.

Gemäß einer besonderen Ausführungsform der vorliegenden Erfindung ist ein PC-Netzwerk vorgesehen, in dem den gelesenen Behälterdaten zugeordnete Behälterdaten gespeichert sind, wobei die Maschinensteuerung an das PC-Netzwerk angeschlossen ist. Dies bringt den Vorteil mit sich, dass am Behälter selbst nur wenige Daten gespeichert sein müssen, beispielsweise lediglich die Behälterkennung und weitere Daten, die den bestimmten Behälter betreffen, in einem PC-Netzwerk abgelegt sind und von dort abgerufen werden können.

Das Datenlesegerät kann die gelesenen Daten dann entweder direkt an die Maschinensteuerung und/oder aber an das PC-Netzwerk, beispielsweise einen Leitrechner, leiten.

Gemäß einer bevorzugten Ausführungsform ist die Speichereinrichtung ein RFID-Chip und das Datenlesegerät ein RFID-Lesegerät.

Es ist vorteilhaft, wenn das Datenlesegerät ein RFID-Schreib-/Lesegerät ist, so dass Information von der Maschinensteuerung auf den RFID-Chip übertragen werden kann. Dies kann hilfreich für nachfolgende Prozesse sein, beispielsweise Reinigung etc. Weiter kann beispielsweise auf dem Chip festgehalten werden, dass der Inhalt bereits zu lange bereitsteht und nicht mehr verwendbar ist.

Gemäß einem weiteren Ausführungsbeispiel kann das Lesegerät auch ein Laser Scanner sein, der beispielsweise einen Barcode auf dem Behälter einscannt. Der Barcode kann auch unterschiedliche Behälterdaten umfassen. Es ist jedoch auch möglich, dass der Laser Scanner nur die Behälterkennung scannt und weitere der Behälterkennung zugeordnete Behälterdaten in dem PC-Netzwerk gespeichert sind und von dort abrufbar sind.

Bei dem erfindungsgemäßen Verfahren werden zunächst Behälterdaten in einer am Behälter angeordneten Speichereinrichtung gespeichert, die Behälterdaten gelesen, nachdem der Behälter zur Abfüllmaschine transportiert wurde, und der Abfüllprozess in Abhängigkeit der Behälterdaten gesteuert.

Das Lesegerät muss nicht direkt in der Abfüllmaschine angeordnet sein, sondern kann auch beispielsweise außerhalb der Maschine vorgesehen sein oder auch in einer nachgeschalteten Maschine, z. B. einer Abdrehlinie, integriert sein, und damit direkt oder indirekt Einfluss auf die Füllmaschine ausüben.

Vorteilhafterweise stammen die Behälterdaten, die auf der Speichereinrichtung gespeichert sind, aus mindestens einer, vorzugsweise mehreren am Produktionsprozess beteiligten Einrichtungen wie: Cutter, Waage, Reinigungsanlage, manuelle Eingabeeinrichtung.

Somit können unterschiedliche Informationen auf der Speichereinrichtung gespeichert werden, von denen dann zumindest ein Teil für die Steuerung des Abfüllprozesses verwendet wird.

Gemäß einer bevorzugten Ausführungsform geben die Behälterdaten die Art und/oder Temperatur der Befüllung des Behälters und/oder den Zeitpunkt der Befüllung an, wobei die Abfüllmaschine derart angesteuert wird, dass bei nicht zulässigen Behälterdaten der Behälter nicht von der Abfüllmaschine angenommen wird. Unter nicht zulässigen Behälterdaten versteht man Behälterdaten, die nicht vorab bestimmten und in der Steuerung abgelegten Daten bzw. Werten entsprechen.

Somit ist es möglich, dass die Abfüllmaschine die Behälter, die zuerst befüllt wurden, zuerst annehmen kann. Es ist auch möglich, dass in Abhängigkeit der Art der Befüllung des Behälters ein entsprechendes Abfüllprogramm gewählt wird. Dies sichert den korrekten Betrieb der Abfüllmaschine.

Vorteilhafterweise erfolgt die Datenübertragung vom Datenlesegerät auf die Maschinensteuerung und/oder auf das PC-Netzwerk draht- und berührungslos. Eine solche drahtlose Datenübertragung ist im Lebensmittel verarbeitenden Bereich, in dem nass gereinigt wird, besonders hygienisch und nicht störungsanfällig.

Die gelesenen Behälterdaten können dann auch dokumentiert werden.

Ein Abfüllsystem umfasst dann eine Abfüllmaschine gemäß der vorliegenden Erfindung sowie einen Behälter mit einer Speichereinrichtung zum Speichern von Behälterdaten.

Vorteilhafterweise ist am Behälter eine Anzeige vorgesehen, die zumindest einen Teil der gespeicherten Daten optisch anzeigt.

Die vorliegende Erfindung wird nachfolgend unter Bezugnahme der Zeichnungen näher erläutert.

Nachfolgend wird die vorliegende Erfindung unter Bezugnahme der folgenden Figuren näher erläutert:
- Fig. 1: zeigt grob schematisch eine erste Ausführungsform der vorliegenden Erfindung.
- Fig. 2: zeigt grob schematisch eine weitere Ausführungsform gemäß der vorliegenden Erfindung.

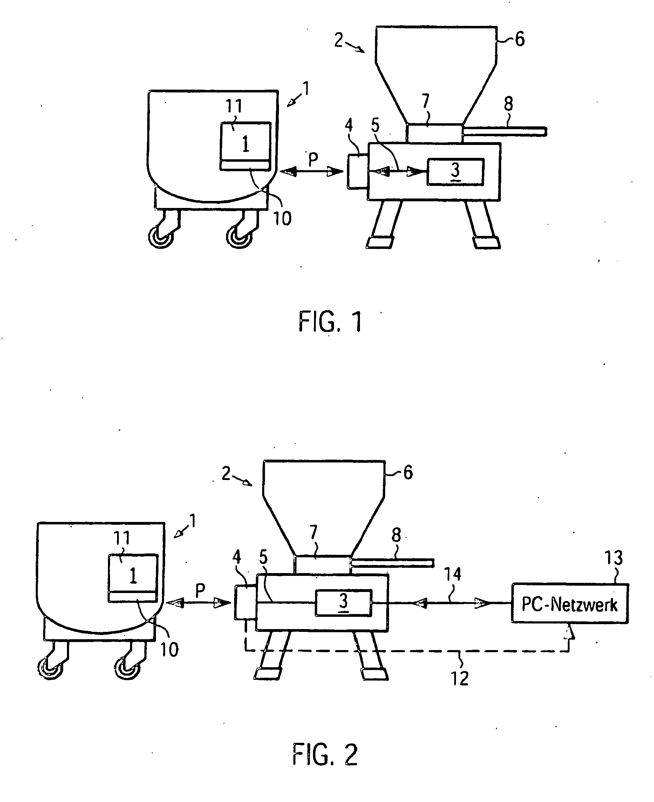

Fig. 1 zeigt grob schematisch ein System zum Abfüllen von Lebensmitteln. Das System umfasst einen Behälter 1 in dem ein Lebensmittel, beispielsweise Wurstbrät, eingefüllt wurde. Der Behälter ist beispielsweise ein Edelstahlbehälter mit einem Füllvolumen von ca. 200 I - 300 I und dient hier als sogenannter Brätwagen. Das Lebensmittel, hier das Brät, wurde in einem Cutter zubereitet und chargenweise in mehrere Brätwagen abgefüllt. Der Behälter 1 weist hier an seiner Außenseite angeordnet eine Speichereinrichtung 10 auf. Die Speichereinrichtung 10 kann selbstverständlich auch an einer anderen Stelle am oder im Behälter angeordnet sein. In der Speichereinrichtung 10 sind Behälterdaten, die den speziellen Behälter betreffen, gespeichert. Die Daten auf der Speichereinrichtung 10 können von den am Produktionsprozess beteiligten Einrichtungen stammen, wie z. B. Cutter, Waagen, Reinigungsanlagen, manuelle Eingabeeinrichtungen etc. und wurden über eine entsprechende Einrichtung oder mehrere Einrichtungen ( wie z.B. RFID Schreibgerät, Barcodedrucker etc. ) auf die Speichereinrichtung 10 übertragen.

Information auf der Speichereinrichtung können beispielsweise sein: eine Brätwagennummer, die Art des Behälterinhalts, die Chargennummer des Inhalts (eine Cutterbefüllung entspricht beispielsweise einer Charge), Zeitpunkt der Produktion/Befüllung des Brätwageninhalts, Produktionsort des Brätwageninhalts, Reihenfolge der Befüllung, Gewicht des Inhalts, Temperatur des Inhalts, Zeitpunkt der Leerung des Brätwagens, also die Übergabe des Brätwageninhalts in den Fülltrichter der Füllmaschine Zeitpunkt der letzten Reinigung des Brätwagens etc.

Weiter umfasst das System eine Abfüllmaschine 2, hier einen Vakuumfüller, zur Herstellung von gefüllten Würsten, der einen Fülltrichter 6 aufweist, in dem das Wurstbrät eingefüllt wird, ein Förderwerk 7, mit dem das Brät in ein Füllrohr 8 gefördert wird. Aus dem Füllrohr 8 wird das Brät dann in die Wursthüllen zur Herstellung von Würsten geschoben. Die Abfüllmaschine weist eine Maschinensteuerung 3 auf, die den Abfüllprozess steuert.

Weiter umfasst die Abfüllmaschine ein Datenlesegerät 4, das die Behälterdaten, die in der Speichereinrichtung 10 an den jeweiligen Behältern 1 gespeichert sind, empfangen kann. Hier ist das Datenlesegerät 4 direkt an bzw. in der Abfüllmaschine angeordnet. Dies muss jedoch nicht zwingend der Fall sein. Das Datenlesegerät kann auch beabstandet von der Abfüllmaschine angeordnet sein oder beispielsweise in einer der Füllmaschine nachgeschalteten Maschine, z. B. einer Abdrehlinie integriert sein, und somit direkt oder indirekt Einfluss auf die Abfüllmaschine nehmen.

Das Datenlesegerät 4 ist derart ausgebildet, dass es Daten über eine Leitung 5 oder aber auch drahtlos an die Maschinensteuerung 3 leiten kann. Somit kann die Maschinensteuerung den Abfüllprozess in Abhängigkeit der gelesenen Behälterdaten durchführen.

Die Behälterdaten können beispielsweise verwendet werden für:

die Chargenrückverfolgung bzw. Prozessdokumentation, zum Vermeiden von Verwechslungen unterschiedlicher Produkte, wobei falsche Produkte nicht zur weiteren Verarbeitung angenommen werden. Die Behälterdaten können auch dazu verwendet werden, eine richtige Reihenfolge einzuhalten (first in, first out). Zu lange bereitstehendes Lebensmittel wird von der Abfüllmaschine nicht mehr angenommen. Auch Produkte mit überhöhter Temperatur werden von der Füllmaschine nicht mehr angenommen. Darüber hinaus kann in Abhängigkeit der gelesenen Behälterdaten an der Füllmaschine ein entsprechendes Abfüllprogramm automatisch gewählt werden.

Vorteilhafterweise ist die Speichereinrichtung 10 ein RFID-Chip. Das Datenlesegerät 4 ist dann ein RFID-Lesegerät, das Lesegerät 4 kann auch ein Schreib/Lesegerät sein, das Informationen bzw. Daten von der Maschinensteuerung, wie beispielsweise den Zeitpunkt der Entleerung des Behälterinhalts in den Fülltrichter der Füllmaschine auf den RFID-Chip überträgt. Die Datenübertragung zwischen Speichereinrichtung und Datenlesegerät 4 erfolgt drahtlos und berührungslos und ist daher im Lebensmittel verarbeitenden Bereich, in dem nass gereinigt wird, besonders hygienisch und nicht störanfällig.

Das Datenlesegerät 4 zum Auslesen bzw. zur Übemahme von Behälterdaten kann auch ein Laser Scanner sein. Dazu kann die Speichereinrichtung 10 beispielsweise ein aufgebrachter Barcode, z:B. ein Barcodeetikette, sein.

Bei dem in Fig. 1 gezeigten Ausführungsbeispiel werden die Behälterdaten von dem Datenlesegerät 4 direkt zur Maschinensteuerung 3 geleitet.

Das in Fig. 2 gezeigte Ausführungsbeispiel entspricht dem in Fig. 1 gezeigten Ausführungsbeispiel mit der Ausnahme, dass hier das System noch ein zusätzliches PC-Netzwerk 13 umfasst. In dem PC-Netzwerk sind weitere den Behälterdaten, die auf den Speichereinrichtungen 10 gespeichert sind, zugeordnete Behälterdaten gespeichert. Die Maschinensteuerung 3 ist ebenfalls mit dem PC-Netzwerk 13 verbunden. Somit kann beispielsweise das Datenlesegerät 4 nur einen Teil der Behälterdaten, beispielsweise lediglich die Behälterkennung von der Speichereinrichtung 10, lesen. Über das PC-Netzwerk können der Maschinensteuerung 3 dann für einen bestimmten Behälter 1 entsprechende weitere Behälterdaten zugeleitet werden, beispielsweise über eine Leitung 14 oder aber auch drahtlos. Das PC-Netzwerk kann beispielsweise die PCs von mehreren Einrichtungen umfassen, die am Produktionsprozess beteiligt sind. Das Netzwerk 13 kann auch einen entsprechenden Leitrechner aufweisen, mit dem dann die Steuerung 3 verbunden ist. Das Datenlesegerät 4 kann dann die gelesenen Behälterdaten auch über eine Leitung 12 oder aber drahtlos direkt dem PC-Netzwerk, beispielsweise einem Leitrechner, zuführen. Von dem Netzwerk können dann wiederum die Daten an die Maschinensteuerung 3 geleitet werden.

Nachfolgend wird das erfindungsgemäße Verfahren unter Bezugnahme der Figuren 1 und 2 näher erläutert.

Vor dem eigentlichen Abfüllvorgang wird, beispielsweise bei der Wurstherstellung, zunächst in einem Cutter das Brät zubereitet und zum Zwecke des Weitertransports chargenweise in den Brätwagen 1 abgefüllt. Vor dem Transport des Behälters zur Abfüllmaschine 2 werden auf der Speichereinrichtung 10 für den Behälter 1 entsprechende Behälterdaten gespeichert. Dies kann beispielsweise erfolgen indem ein RFID-Schreibgerät Information auf den . RFID-Chip schreibt. Auch der Ausdruck eines Barcodeetiketts, das dann am Behälter befestigt wird, ist denkbar.

Wird der Behälter 2, hier der Brätwagen, dann zur Abfüllmaschine 2 gebracht, so kann das Datenlesegerät 4 die auf dem Speicher 10 gespeicherten Behälterdaten lesen, wie durch den Pfeil P dargestellt ist. Die ausgelesenen Daten werden an die Steuereinrichtung 3 geleitet. Wie auch im Zusammenhang mit der Fig. 2 beschrieben wurde, können auch in Abhängigkeit der gelesenen Behälterdaten, beispielsweise der Behälterkennung der Maschinensteuerung 3 aus einem PC-Netzwerk 13, weitere Behälterdaten des entsprechenden Behälters zugeführt werden.

Die Maschinensteuerung 3 kann dann den Abfüllprozess in Abhängigkeit der gelesenen Behälterdaten durchführen. Dabei vergleicht die Maschinensteuerung 3 zumindest einen Teil der Behälterdaten mit gespeicherten Daten. Bei Nichtübereinstimmung der gespeicherten Daten mit den der Maschinensteuerung 3 zugeführten Behälterdaten bestimmt gemäß einer bevorzugten Ausführungsform die Maschinensteuerung 3, dass es sich um nicht zulässige Behälterdaten handelt.

Bei nicht zulässigen Behälterdaten wird dann der Behälter 1 von der Abfüllmaschine 2 nicht für den weiteren Abfüllprozess angenommen. Dazu kann die Abfüllmaschine beispielsweise eine nicht dargestellte Anzeige aufweisen, die einen Hinweis darauf gibt, dass der Behälter nicht angenommen werden kann. Darüber hinaus kann die Abfüllmaschine auch die Annahme des Behälters verhindern, indem die Hebevorrichtung blockiert wird und damit der Behälterinhalt nicht in den Trichter der Füllmaschine entleert werden kann Entsprechen jedoch die gelesenen Behälterdaten den entsprechend vorher eingespeicherten Solldaten so wird der Behälter 1 angenommen.

Die Maschinensteuerung 3 kann den Abfüllprozess auch so steuern, dass Behälter 1 die zuerst von dem Cutter befüllt wurden, zuerst angenommen werden, so dass eine bestimmte Reihenfolge eingehalten werden kann.

Wenn die Behälterdaten die Art und/oder Temperatur der Befüllung des Behälters und/oder den Zeitpunkt der Befüllung des Behälters angeben, so wird sichergestellt, dass nur die passende Befüllungsart, deren Temperatur nicht überschritten wurde, und die noch nicht zu lange bereitsteht, verarbeitet wird. Dies ist insbesondere bei mehreren Produktionslinien mit unterschiedlichen Produkten von Vorteil und gewährleistet eine korrekte Verarbeitung.

Für unterschiedliche Lebensmittel, d. h. unterschiedliche Arten der Befüllung, kann auch ein entsprechendes Abfüllprogramm gewählt werden, das auf das Lebensmittel im Behälter 1 und das herzustellende Produkt abgestimmt ist.

Die gelesenen Daten können auch dokumentiert werden.

Wie in den Figuren 1 und 2 gezeigt ist, können die Behälter 1 noch weiter eine Anzeige 11 aufweisen, die zumindest einen Teil der Behälterdaten anzeigt, beispielsweise die Brätwagennummer oder den Zeitpunkt der Produktion oder die Art des Brätwageninhalts, so dass das Personal sofort erkennen kann, welcher Behälter bzw. Brätwagen einer Abfüllmaschine 2 zugeführt werden soll.

## Patentansprüche

1. Vakuumfüller, zur Herstellung von gefüllten Würsten, der mit Behältern (1), in denen das Lebensmittel gelagert ist, beschickt wird, und eine Maschinensteuerung (3) aufweist,
**gekennzeichnet durch**
ein Datenlesegerät (4), das Behälterdaten, die in einer Speichereinrichtung (10) an den jeweiligen Behältern (11) gespeichert sind, empfängt, wobei
die Maschinensteuerung (3) derart ausgelegt ist, dass der Abfüllprozess in Abhängigkeit der gelesenen Behälterdaten durchgeführt wird.

2. Vakuumfüller nach Anspruch 1 **gekennzeichnet durch** ein PC-Netzwerk (13) in dem den gelesenen Behälterdaten zugeordnete Behälterdaten gespeichert sind, wobei die Maschinensteuerung an das PC-Netzwerk angeschlossen ist.

3. Vakuumfüller nach Anspruch 1 oder 2, **dadurch gekennzeichnet, dass** das Datenlesegerät (4) die Daten direkt an die Maschinensteuerung (3) und/oder an das PC-Netzwerk leitet.

4. Vakuumfüller nach mindestens einem der vorhergehenden Ansprüche, **dadurch gekennzeichnet, dass** die Speichereinrichtung (10) ein RFID-Chip und das Datenlesegerät (4) ein RFID-Lesegerät ist.

5. Vakuumfüller nach Anspruch 4, **dadurch gekennzeichnet, dass** das Datenlesegerät (4) ein RFID-Schreiblesegerät ist, das Informationen von der Maschinensteuerung (3) auf den RFID-Chip übertragen kann.

6. Vakuumfüller nach mindestens einem der Ansprüche 1 bis 3, **dadurch gekennzeichnet, dass** das Lesegerät (4) ein Laser-Scanner ist.

7. Vakuumfüller nach Anspruch 2, 3 und 6, **dadurch gekennzeichnet, dass** der Laser-Scanner eine Behälterkennung scannt und weitere der Behälterkennung zugeordnete Behälterdaten in dem PC-Netzwerk (13) gespeichert sind.

8. Verfahren zum Abfüllen von Lebensmitteln mit einem Vakuumfüller, der mit Behältern, in denen das Lebensmittel gelagert ist, beschickt wird, **gekennzeichnet durch:**
a) Speichern von Behälterdaten in einer am Behälter (1) angeordneten Speichereinrichtung (10)
b) Lesen der Behälterdaten mit einem Datenlesegerät (4) und wobei
c) eine Maschinensteuerung (3) vorgesehen ist, derart, dass der Abfüllprozess in Abhängigkeit der gelesenen Behälterdaten durchgeführt wird.

9. Verfahren nach Anspruch 8, **dadurch gekennzeichnet, dass** die Behälterdaten aus mindestens einer vorzugsweise mehreren am Produktionsprozess beteiligten Einrichtungen stammen, wie:
Cutter, Waage, Reinigungsanlage, manuelle Eingabeeinrichtung.

10. Verfahren nach mindestens einem der Ansprüche 8 oder 9, **dadurch gekennzeichnet, dass** die Behälterdaten die Art und/oder Temperatur der Befüllung des Behälters und/oder den Zeitpunkt der Befüllung des Behälters angeben, wobei
der Vakuumfüller derart angesteuert wird, dass bei nicht zulässigen Behälterdaten der Behälter nicht von dem Vakuumfüller (2) angenommen wird.

11. Verfahren nach Anspruch 10, **dadurch gekennzeichnet, dass** der Vakuumfüller (2) die Behälter (1), die zuerst befüllt wurden, zuerst annimmt.

12. Vorrichtung nach Anspruch 10 oder 11, **dadurch gekennzeichnet, dass** in Abhängigkeit der Art der Befüllung ein entsprechendes Abfüllprogramm gewählt wird.

13. Verfahren nach mindestens einem der Ansprüche 9 bis 12, **dadurch gekennzeichnet, dass** die Datenübertragung vom Datenlesegerät (4) auf die Maschinensteuerung und/oder das PC-Netzwerk (13) draht- und berührungslos erfolgt.

14. Verfahren nach mindestens einem der Ansprüche 9 bis 13, **dadurch gekennzeichnet, dass** die gelesenen Behälterdaten dokumentiert werden.

15. Abfüllsystem mit einem Vakuumfüller nach mindestens einem der Ansprüche 1-7, **dadurch gekennzeichnet, dass** das System weiter einen Behälter (1) aufweist mit einer Speichereinrichtung (10) zum Speichern von Behälterdaten.

16. Abfüllsystem nach Anspruch 15, **dadurch gekennzeichnet, dass** am Behälter (1) eine Anzeige (11) angeordnet ist, die zumindest einen Teil der in der Speichereinrichtung (10) gespeicherten Daten optisch anzeigt.

## Claims

1. A vacuum filler for producing stuffed sausages, which has supplied thereto containers (1) having the respective foodstuff stored therein, and which is provided with a machine control unit (3),
**characterized by**
a data reader (4) which receives container data stored in a storage means (10) at the respective containers (1), wherein
the machine control unit (3) is implemented such that the filling process is executed in dependence upon the container data read.

2. A vacuum filler according to claim 1, **characterized by** a PC network (13) having stored therein container data associated with the container data read, the machine control unit being connected to the PC network.

3. A vacuum filler according to claim 1 or 2, **characterized in that** the data reader (4) transmits the data directly to the machine control unit (3) and/or to the PC network.

4. A vacuum filler according to at least one of the preceding claims, **characterized in that** the storage means (10) is an RFID chip and that the data reader (4) is an RFID reader.

5. A vacuum filler according to claim 4, **characterized in that** the data reader (4) is an RFID reader/writer which is able to transmit information from the machine control unit (3) to the RFID chip.

6. A vacuum filler according to at least one of the claims 1 to 3, **characterized in that** the reader (4) is a laser scanner.

7. A vacuum filler according to claims 2, 3 and 6, **characterized in that** the laser scanner scans a container identification and that additional container data, which are associated with the container identification, are stored in the PC network (13).

8. A method of filling foodstuffs by means of a vacuum filler which has supplied thereto containers having the respective foodstuff stored therein, **characterized by**:
a) storing container data in a storage means (10) provided on the container (1),
b) reading the container data with a data reader (4), and wherein
c) a machine control unit (3) is provided such that the filling process is executed in dependence upon the container data read.

9. A method according to claim 8, **characterized in that** the container data originate from at least one, preferably from a plurality of units participating in the production process, such as:
cutter, weighing machine, cleaning equipment, manual input unit.

10. A method according to at least one of the claims 8 or 9, **characterized in that** the container data indicate the nature and/or the temperature of the content of the container and/or the time at which the container was filled, wherein
the vacuum filler is controlled such that, in the case of non-admissible container data, the container will not be accepted by the vacuum filler (2).

11. A method according to claim 10, **characterized in that** the containers (1) which have been filled first will be accepted first by the vacuum filler (2).

12. A method according to claim 10 or 11, **characterized in that** a suitable filling program is selected in dependence upon the nature of the filling.

13. A method according to at least one of the claims 9 to 12, **characterized in that** data transmission from the data reader (4) to the machine control unit and/or the PC network (13) takes place in a wireless and contactless mode.

14. A method according to at least one of the claims 9 to 13, **characterized in that** the read container data are documented.

15. A filling system comprising a vacuum filler according to at least one of the claims 1 to 7, **characterized in that** the system additionally comprises a container (1) with a storage means (10) for storing container data.

16. A filling system according to claim 15, **characterized in that** the container (1) has arranged thereon a display (11) which optically displays at least part of the data stored in the storage means (10).

## Revendications

1. Remplisseuse sous vide pour la fabrication de saucisses remplies, qui est chargée par des conteneurs (1), dans lesquels sont stockées les denrées alimentaires, et présente une commande de machine (3),
**caractérisée par**
un lecteur de données (4), qui reçoit des données de conteneurs mémorisées dans un dispositif de mémorisation (10) sur les conteneurs respectifs (11),
la commande de machine (3) étant conçue de telle sorte que le processus de remplissage est mis en oeuvre en fonction des données de conteneurs lues.

2. Remplisseuse sous vide suivant la revendication 1, **caractérisée par** un réseau PC (13), dans lequel sont mémorisées des données de conteneurs associées aux données de conteneurs lues, la commande de machine étant raccordée au réseau PC.

3. Remplisseuse sous vide suivant l'une des revendications 1 et 2, **caractérisée en ce que** le lecteur de données (4) transmet les données directement à la commande de machine (3) et/ou au réseau PC.

4. Remplisseuse sous vide suivant l'une au moins des revendications précédentes, **caractérisée en ce que** le dispositif de mémorisation (10) est une puce RFID et le lecteur de données (4) est un lecteur RFID.

5. Remplisseuse sous vide suivant la revendication 4, **caractérisée en ce que** le lecteur de données (4) est un appareil de lecture - écriture RFID, qui peut transmettre des informations de la commande de machine (3) à la puce RFID.

6. Remplisseuse sous vide suivant l'une au moins des revendications 1 à 3, **caractérisée en ce que** le lecteur (4) est un scanner laser.

7. Remplisseuse sous vide suivant les revendications 2, 3 et 6, **caractérisée en ce que** le scanner laser scanne un code de conteneurs et d'autres données de conteneurs, associées au code, sont mémorisées dans le réseau PC (13).

8. Procédé de remplissage de denrées alimentaires par une remplisseuse sous vide, qui est chargée par des conteneurs dans lesquels sont stockées les denrées alimentaires, **caractérisé par** :
a) la mémorisation de données de conteneurs dans un dispositif de mémorisation (10) disposé sur le conteneur (1),
b) la lecture des données de conteneurs avec un lecteur de données (4), et dans lequel
c) une commande de machine (3) est prévue de telle sorte qu'un processus de remplissage en fonction des données de conteneurs lues est mis en oeuvre.

9. Procédé suivant la revendication 8, **caractérisé en ce que** les données de conteneurs proviennent d'au moins un, de préférence de plusieurs dispositifs participant au processus de production, tels que :
cutter, balance, installation de lavage, dispositif d'introduction manuel.

10. Procédé suivant l'une au moins des revendications 8 et 9, **caractérisé en ce que** les données de conteneurs indiquent la nature et/ou la température du remplissage du conteneur et/ou l'instant du remplissage du conteneur,
la remplisseuse sous vide étant commandée de telle sorte que le conteneur n'est pas admis par la remplisseuse sous vide (2) en cas de données de conteneurs inadmissibles.

11. Procédé suivant la revendication 10, **caractérisé en ce que** la remplisseuse sous vide (2) admet d'abord les conteneurs (1), qui ont été d'abord remplis.

12. Dispositif suivant l'une des revendications 10 et 11, **caractérisé en ce qu'**un programme de remplissage correspondant est choisi en fonction de la nature du remplissage.

13. Procédé suivant l'une au moins des revendications 9 à 12, **caractérisé en ce que** la transmission de données du lecteur de données (4) à la commande de machine et/ou au réseau PC (13) s'effectue sans fil et sans contact.

14. Procédé suivant l'une au moins des revendications 9 à 13, **caractérisé en ce que** les données de conteneurs lues sont documentées.

15. Système de remplissage par une remplisseuse sous vide suivant l'une au moins des revendications 1 - 7, **caractérisé en ce que** le système présente en outre un conteneur (1) avec un dispositif de mémorisation (10) pour mémoriser des données de conteneurs.

16. Système de remplissage suivant la revendication 15, **caractérisé en ce qu'**un affichage (11), qui affiche optiquement au moins une partie des données mémorisées dans le dispositif de mémorisation (10), est disposé sur le conteneur (1).
